(19) **Europäisches Patentamt / European Patent Office / Office européen des brevets**

(11) **EP 4 566 872 A1**

(12) # EUROPEAN PATENT APPLICATION
published in accordance with Art. 153(4) EPC

(43) Date of publication:
**11.06.2025 Bulletin 2025/24**

(21) Application number: **23862822.6**

(22) Date of filing: **28.07.2023**

(51) International Patent Classification (IPC):
**B60L 58/13** (2019.01)   **B60L 9/18** (2006.01)
**B60L 15/20** (2006.01)   **B60L 50/60** (2019.01)
**B60L 58/16** (2019.01)   **H02J 7/00** (2006.01)

(52) Cooperative Patent Classification (CPC):
**B60L 9/18; B60L 15/20; B60L 50/60; B60L 58/13; B60L 58/16; H02J 7/00**

(86) International application number:
**PCT/JP2023/027855**

(87) International publication number:
**WO 2024/053279 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.09.2022 JP 2022141310**

(71) Applicant: **Hitachi Construction Machinery Co., Ltd.**
**Tokyo 110-0015 (JP)**

(72) Inventors:
• **OHARA Shunsuke**
  **Tokyo 100-8280 (JP)**
• **KANEKO Satoru**
  **Tokyo 100-8280 (JP)**
• **KITAGUCHI Atsushi**
  **Tsuchiura-shi, Ibaraki 300-0013 (JP)**
• **TAKADA Tomonori**
  **Tsuchiura-shi, Ibaraki 300-0013 (JP)**

(74) Representative: **Manitz Finsterwald**
**Patent- und Rechtsanwaltspartnerschaft mbB**
**Martin-Greif-Strasse 1**
**80336 München (DE)**

(54) **DUMP TRUCK**

(57)     An object of the present invention is to provide a trolley-powered dump truck that can prevent overdischarge of a battery while suppressing the lowering of the transportation efficiency. To this end, a vehicle controller has a battery level decrease amount computation section that computes a battery level decrease amount in a non-trolley-line zone, and a battery level target increase width computation section configured to compute a battery level target increase width by adding a predetermined battery level addition amount to the battery level decrease amount. The vehicle controller also has a battery level target value computation section that computes a battery level target value by adding the battery level target increase width to a battery level at the start of travelling in a trolley line zone 22, and a travelling operation support section that supports travelling operation that causes the battery level at the end of travelling in the trolley line zone 22 to correspond with the battery level target value.

[FIG. 5]

**Description**

Technical Field

The present invention relates to a trolley-powered dump truck equipped with a battery.

Background Art

In recent years, as reduction in the environmental burden, a shift from power sources dependent on conventional fossil fuels to electric driving has been advanced in the respective fields of products. Also for mining dump trucks that convey ore and stripped soil from a loading site to a dumping site, movement toward practical use of a dump truck equipped with a battery instead of an engine has become active.

At a mine, a plurality of dump trucks with the same vehicle size class reciprocate on a route from a loading site to a dumping site, and the operation time is 24 hours. Since it is important how efficiently the load is transported, emphasis is placed on the transportation efficiency indicated by the total transportation amount of the plurality of travelling dump trucks per unit time. If the battery is charged while the dump truck is stopped, the transportation efficiency greatly lowers. Hence, a trolley-powered dump truck that executes charging while travelling is being developed. A trolley line that supplies power from a facility on the ground is installed along a mine travelling path. In the zone in which the trolley line is disposed (hereinafter, referred to as a trolley line zone), the trolley-powered dump truck charges the battery while driving a travelling motor to travel by the power supplied from the trolley line. In the zone in which the trolley line is not disposed (hereinafter, referred to as a non-trolley-line zone), the trolley-powered dump truck drives the travelling motor to travel by power discharged from the battery.

The trolley-powered dump truck needs to execute, in the trolley line zone, charging sufficient to completely travel in the non-trolley-line zone. There are upper limits on the trolley line supplying power and the battery charging power due to limitations in terms of facilities and the battery lifetime. Hence, the charging time in the trolley line zone needs to be reserved through travelling at a lowered speed in the trolley line zone. Meanwhile, it is desirable to suppress the speed lowering in the trolley line zone in order to avoid the lowering of the transportation efficiency.

There is a technology disclosed in Patent Document 1 for a vehicle that charges a battery by a line while travelling and travels by battery power in a zone in which the line does not exist, including such a trolley-powered dump truck. According to this technology, a charging amount necessary for the next time of travelling in the zone in which the line does not exist can be secured while charging is executed with a maximum charging current specified from the lifetime of a power storing device.

Prior Art Document

Patent Document

Patent Document 1: PCT Patent Publication No. WO2013/153659

Summary of the Invention

Problem to be Solved by the Invention

The dump truck travels on a rough terrain unlike the train and the trolley bus. Hence, there is a possibility that trolley line charging is suspended due to a trouble and the battery level lowers. Accordingly, it is required to not only secure a charging amount necessary for travelling in the non-trolley-line zone but also keep the battery level high. Further, because continuous operation for 24 hours is executed and it is impossible to install the trolley line at the loading site and the dumping site at which the dump truck is stopped, the dump truck needs to increase the battery level by only charging during travelling in the trolley line zone.

However, with the technology described in Patent Document 1, in the case of attempting to set the battery level of the next time high by one time of charging in the trolley line zone, the travelling speed in the trolley line zone is required to be greatly lowered in order to reserve the charging time, and thus the transportation efficiency lowers.

The present invention is made in view of the above-described problem, and an object thereof is to provide a trolley-powered dump truck that can prevent overdischarge of a battery while suppressing the lowering of the transportation efficiency.

Means for Solving the Problem

In order to achieve the above-described object, the present invention provides a dump truck including a travelling motor, an inverter that converts direct-current power to alternating-current power and supplies the alternating-current power to the travelling motor, a battery, a battery converter that controls charging/discharging power of the battery, a pantograph that receives power supply from a trolley line, and a vehicle controller that controls the battery converter and the inverter such that power is supplied from the trolley line to the battery and the travelling motor in a trolley line zone that is a travelling zone in which the trolley line is disposed and controls the battery converter and the inverter such that power is supplied from the battery to the travelling motor in a non-trolley-line zone that is a travelling zone in which the trolley line is not disposed. The vehicle controller has a battery level decrease amount computation section configured to compute a battery level decrease amount in the non-trolley-line zone and a battery level target increase width computation section configured to compute a battery level target increase width by adding a predetermined battery level addition amount to the battery level decrease amount. The vehicle controller also has a battery level target value computation section configured to compute a battery level target value by adding the battery level target increase width to a battery level at the start of travelling in the trolley line zone and a travelling operation support section that supports travelling operation that causes the battery level at the end of travelling in the trolley line zone to correspond with the battery level target value.

According to the present invention configured as above, overdischarge of the battery can be prevented while the lowering of the transportation efficiency is suppressed by supporting the travelling operation that increases the battery level in a plurality of times of the travelling cycle gradually (by the battery level addition amount in every travelling cycle).

Advantages of the Invention

According to the present invention, it becomes possible to prevent overdischarge of the battery while suppressing the lowering of the transportation efficiency in the trolley-powered dump truck equipped with the battery.

Brief Description of the Drawings

FIG. 1 is a diagram depicting a configuration of a dump truck in a first embodiment of the present invention.
FIG. 2 is a diagram schematically depicting a travelling route of the dump truck at a mine.
FIG. 3 is a diagram depicting a configuration of an electric drive system mounted in the dump truck in the first embodiment of the present invention.
FIG. 4 is a diagram depicting battery level variation in a non-trolley-line zone.
FIG. 5 is a diagram depicting battery level variation of each travelling cycle.
FIG. 6 is a block diagram depicting processing relating to computation of a battery level target value by a vehicle controller.
FIG. 7 is a flowchart of processing repeatedly executed by a battery level variation recording section during travelling in a trolley line zone.
FIG. 8 is a flowchart of processing repeatedly executed by the battery level variation recording section during travelling in the non-trolley-line zone.
FIG. 9 is a flowchart of processing repeatedly executed by a battery level target value computation section during travelling in the non-trolley-line zone.
FIG. 10 is a block diagram depicting processing relating to travelling operation support by the vehicle controller.
FIG. 11 is a diagram depicting one example of a display screen of a display device.
FIG. 12 is a block diagram depicting processing relating to computation of the battery level target value by the vehicle controller in a second embodiment of the present invention.
FIG. 13 is a flowchart depicting processing by a battery level variation estimation section.
FIG. 14 is a block diagram depicting processing relating to control of the battery charging power by the vehicle controller in a third embodiment of the present invention.
FIG. 15 is a block diagram depicting processing relating to the travelling operation support by the vehicle controller in a fourth embodiment of the present invention.

Modes for Carrying Out the Invention

Embodiments of the present invention are described below with use of the drawings. In the respective diagrams, an equivalent element is given the same reference character, and overlapping description is omitted as appropriate.

[First Embodiment]

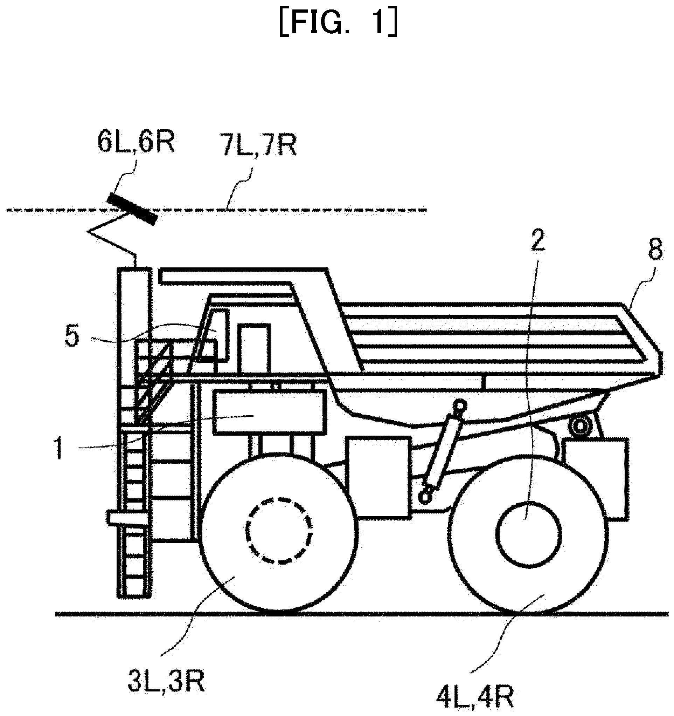

FIG. 1 is a diagram depicting a configuration of a dump truck in a first embodiment of the present invention. The dump truck in the present embodiment is a trolley-type dump truck that travels by power obtained from a trolley line or power of a battery.

In FIG. 1, the dump truck includes a vessel 8 disposed rotatably in the upward-downward direction on the upper rear side of the vehicle body and a driving seat 5 disposed on the upper front side. A pair of left and right driven wheels 3L and 3R are disposed on the lower front side of the vehicle body. A pair of left and right drive wheels 4L and 4R are disposed on the lower rear side of the vehicle body. A travelling motor 2 is connected to the drive wheels 4L and 4R.

A battery 1 is disposed on the front side of the vehicle body. A pair of left and right pantographs 6L and 6R are installed on the upper side of the vehicle body. In a travelling zone in which trolley lines 7L and 7R are disposed (hereinafter, a trolley line zone), the pantographs 6L and 6R come into contact with the two trolley lines 7L and 7R and receive supply of power from the trolley lines 7L and 7R. In a travelling zone in which the trolley lines 7L and 7R are not disposed (hereinafter, a non-trolley-line zone), the pantographs 6L and 6R are retracted.

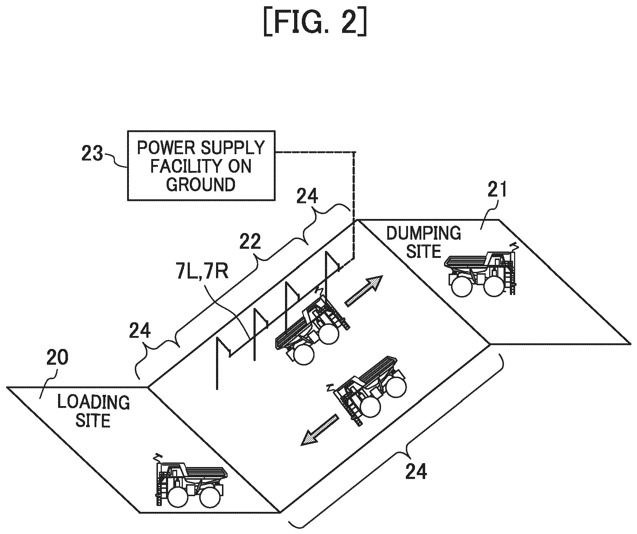

FIG. 2 is a diagram schematically depicting a travelling route of the dump truck at a mine. The dump truck reciprocates on the route from a loading site 20 to a dumping site 21 at the mine. A trolley line zone 22 is set in a midway area in the travelling route. Power is supplied to the trolley lines 7L and 7R from a power supply facility 23 on the ground. In a loaded state in travelling from the loading site 20 to the dumping site 21, the dump truck receives power supply from the trolley lines 7L and 7R to travel. In an unloaded state from the dumping site 21 to the loading site 20, the dump truck does not receive power supply from the trolley lines 7L and 7R and travels by power discharged from the battery 1. Thus, in the travelling route of one reciprocation from the loading site 20 to the dumping site 21, the one trolley line zone 22 and non-trolley-line zones 24 as the other zones exist. Hereinafter, a description is given with the start point of the non-trolley-line zone 24 being regarded as the origination of one cycle of reciprocation.

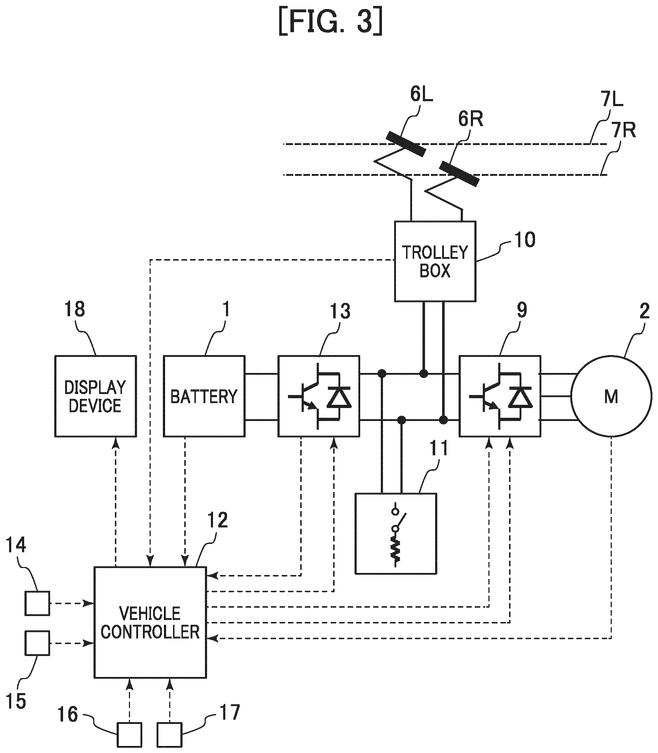

FIG. 3 is a diagram depicting a configuration of an electric drive system mounted in the dump truck in the present embodiment. In FIG. 3, the electric drive system includes the battery 1, a battery converter 13, an inverter 9, the travelling motor 2, a trolley box 10, an external resistor 11, and a vehicle controller 12.

The vehicle controller 12 receives, from the trolley box 10, a signal representing whether or not power supply is being received from the trolley lines 7L and 7R (hereinafter, a trolley signal), receives a battery level from the battery 1, and receives a battery charging/discharging power measurement value from the battery converter 13. The vehicle controller 12 receives an accelerator pedal operation amount from an accelerator pedal 14, and receives a brake pedal operation amount from a brake pedal 15. The vehicle controller 12 receives a travelling speed from the travelling motor 2 or a vehicle speed sensor 16, and receives a loading amount from a loading amount sensor 17. The battery converter 13 receives a battery charging/discharging power command value from the vehicle controller 12. The inverter 9 receives a torque command value or a travelling speed command value from the vehicle controller 12. The vehicle controller 12 outputs various kinds of information to a display device 18 disposed at the driving seat 5.

When the dump truck is controlled by manual operation by a driver, the torque command value depending on the accelerator pedal operation amount or the brake pedal operation amount is transmitted from the vehicle controller 12 to the inverter 9. When the dump truck executes automatic travelling, the travelling speed command value is transmitted from the vehicle controller 12 to the inverter 9.

When the dump truck travels by power discharged from the battery 1 in the non-trolley-line zone 24, the power discharged from the battery 1 is supplied to the inverter 9 through the battery converter 13, and then converted to AC power by the inverter 9 and supplied to the travelling motor 2. As a result, the drive wheels 4L and 4R are driven by the travelling motor 2, and the dump truck travels. In braking of the vehicle, that is, in regeneration by the travelling motor 2, regenerated power produced is converted to DC power by the inverter 9 and is supplied to the battery converter 13. The battery converter 13 converts the regenerated power to charging power and supplies the charging power to the battery 1 to charge the battery 1. When the battery 1 is close to a fully-charged state and charging is impossible, the regenerated power of the travelling motor 2 is consumed by the external resistor 11.

When the dump truck travels by supplied power from the trolley lines 7L and 7R in the trolley line zone 22, the supplied power is supplied to the inverter 9 through the pantographs 6L and 6R and the trolley box 10, and then converted to AC power by the inverter 9 and supplied to the travelling motor 2. The trolley box 10 is configured by a circuit breaker, a filter circuit, and the like. Simultaneously with the driving of the travelling motor 2 by the supplied power, the supplied power is supplied to the battery converter 13. The battery converter 13 converts the supplied power to charging power and supplies the charging power to the battery 1 to charge the battery 1.

The vehicle controller 12 computes the battery charging/discharging power command value such that the battery charging/discharging power command value is equal to or lower than the battery maximum charging/discharging power specified on the basis of the temperature, the deterioration state, and the lifetime of the battery 1 and does not exceed the upper limit value of the trolley line supplying power specified by the maximum allowable passing power of the trolley lines 7L and 7R, the pantographs 6L and 6R, and the trolley box 10. The battery converter 13 operates such that the battery charging/discharging power corresponds with the battery charging/discharging power command value.

The charging power for the battery 1 is limited by the battery maximum charging power and the upper limit value of the trolley line supplying power. Hence, depending on the length of the trolley line zone 22, the travelling speed in the trolley line zone 22 needs to be lowered to reserve the travelling time in the trolley line zone 22. Operation of suppressing speed lowering in the trolley line zone 22 and gradually increasing the battery level in a plurality of times of the mine travelling cycle is desirable for suppressing the lowering of the transportation efficiency. A detailed description is given later of a method for computing a battery level target value in the trolley line zone 22 of each travelling cycle and a method for computing a recommended travelling speed in the trolley line zone 22 for charging to the battery level target value in the trolley line zone 22, for implementing this operation.

In FIG. 3, although the vehicle controller 12 receives the battery level from the battery 1, the acquisition source of the battery level does not have to be the battery 1. Further, although the vehicle controller 12 receives, from the trolley box 10, the trolley signal as a signal representing whether or not power supply is being received from the trolley lines 7L and 7R, the acquisition source of the trolley signal does not have to be the trolley box 10. Although the vehicle controller 12 receives the battery charging power from the battery converter 13, the acquisition source of the battery charging power does not have to be the battery converter 13. Although the vehicle controller 12 receives the travelling speed from the travelling motor 2 or the vehicle speed sensor 16, the acquisition source of the travelling speed does not have to be the travelling motor 2 or the vehicle speed sensor 16. Although the vehicle controller 12 receives the loading amount from the loading amount sensor 17, the acquisition source of the loading amount does not have to be the loading amount sensor 17.

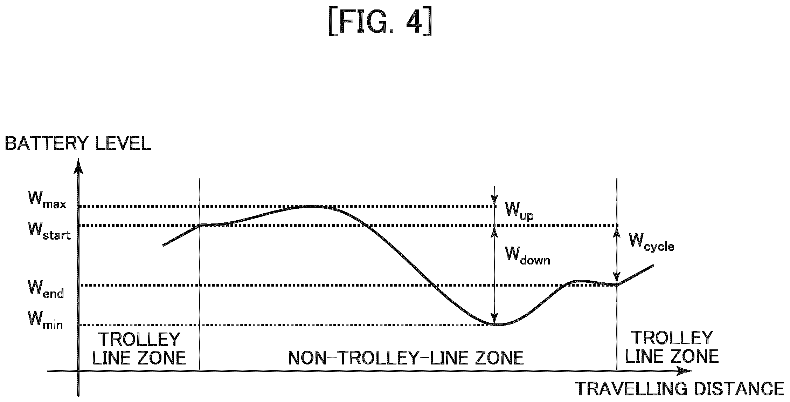

FIG. 4 is a diagram depicting battery level variation in the non-trolley-line zone 24. In travelling in the non-trolley-line zone 24, the battery level lowers when the travelling motor 2 is executing powering operation, and the battery level rises when the travelling motor 2 is executing regenerative operation. In FIG. 4, the battery level at the start point of the non-trolley-line zone 24 is defined as a starting-point battery level (Wstart), and the battery level at the end point of the non-trolley-line zone 24 is defined as an ending-point battery level (Wend). The maximum value of the battery level in the non-trolley-line zone 24 is defined as a battery level maximum value (Wmax), and the minimum value of the battery level in the non-trolley-line zone 24 is defined as a battery level minimum value (Wmin). The difference between the battery level maximum value (Wmax) and the starting-point battery level (Wstart) is defined as a battery level maximum rise amount (Wup). The difference between the starting-point battery level (Wstart) and the battery level minimum value (Wmin) is defined as a battery level maximum fall amount (Wdown). The difference between the starting-point battery level (Wstart) and the ending-point battery level (Wend) is defined as a battery level decrease amount (Wcycle). Three amounts, the battery level decrease amount (Wcycle), the battery level maximum rise amount (Wup), and the battery level maximum fall amount (Wdown), are collectively referred to as the battery level variation amounts.

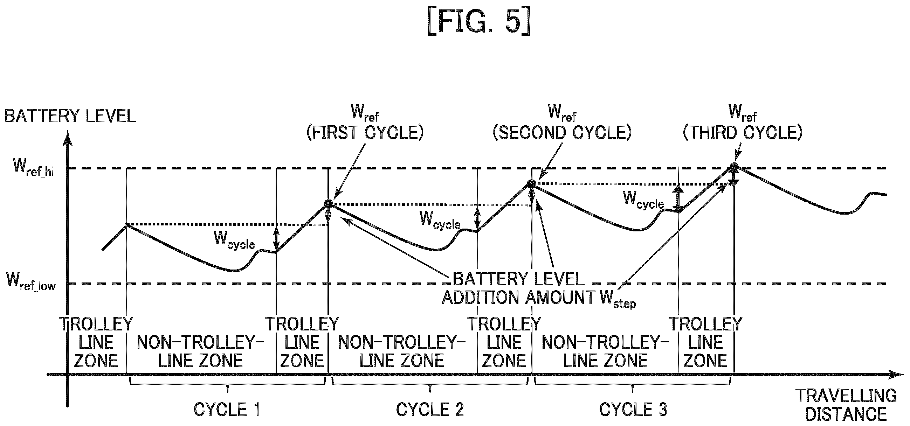

FIG. 5 is a diagram depicting battery level variation of each travelling cycle. A method for computing a battery level target value (Wref) in the vehicle controller 12 is described with use of FIG. 5. FIG. 5 depicts a battery level transition in a case in which the battery level is raised from the state in which the battery level has lowered (hereinafter, referred to as the battery level recovery time). The vehicle controller 12 computes the battery level decrease amount (Wcycle) from a recorded value of battery level variation in the past non-trolley-line zone 24. The vehicle controller 12 computes, as the battery level target value (Wref), a power amount obtained by adding the battery level decrease amount (Wcycle) and a battery level addition amount (Wstep) to a battery level (Wbat) as of the time when the dump truck has entered the trolley line zone 22. The battery level target value (Wref) is computed every time the dump truck enters the trolley line zone 22. Thus, the battery level target value (Wref) differs for each travelling cycle. Moreover, the vehicle controller 12 estimates the battery level maximum value (Wmax) and the battery level minimum value (Wmin) in the non-trolley-line zone 24 of the next time in a case in which charging is executed to reach the battery level target value (Wref). Further, the vehicle controller 12 corrects the battery level target value (Wref) such that the battery level maximum value (Wmax) and the battery level minimum value (Wmin) fall within a range between a battery level upper limit value (Wref_hi) and a battery level lower limit value (Wref_low) that are set on the basis of the battery lifetime. By this method for computing the battery level target value (Wref), the battery level rises by the battery level addition amount (Wstep) in every one cycle as depicted in FIG. 5, and the variation in the battery level is suppressed to fall within the range between the battery level upper limit value (Wref_hi) and the battery level lower limit value (Wref_low). Finally, the battery level maximum value (Wmax) during the travelling cycle corresponds with the battery level upper limit value (Wref_hi), and the battery level variation becomes constant in each travelling cycle (hereinafter, referred to as the battery level stable time).

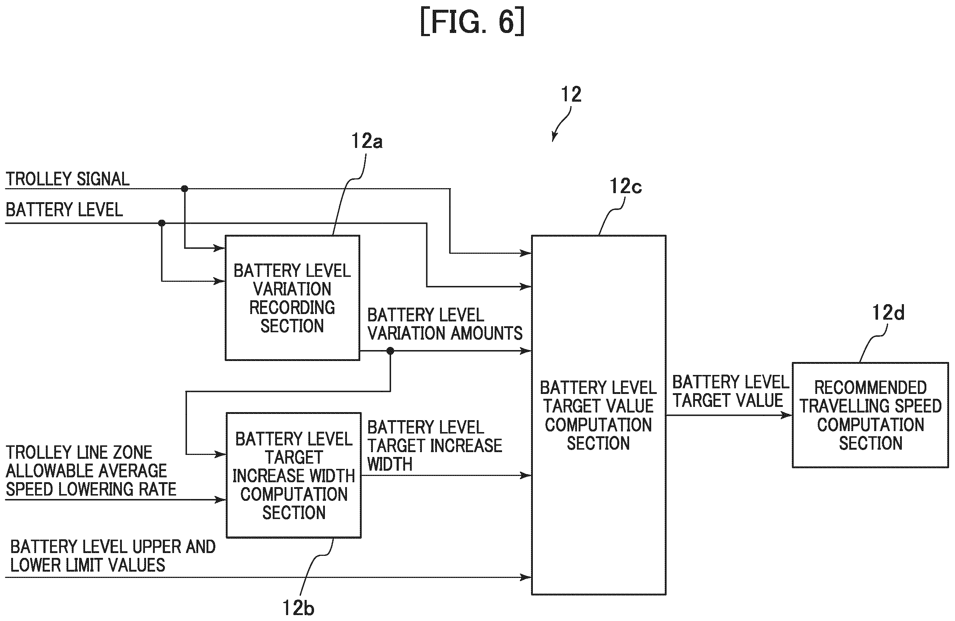

FIG. 6 is a block diagram depicting processing relating to computation of the battery level target value by the vehicle controller 12. In FIG. 6, the vehicle controller 12 has a battery level variation recording section 12a, a battery level target increase width computation section 12b, a battery level target value computation section 12c, and a recommended travelling speed computation section 12d.

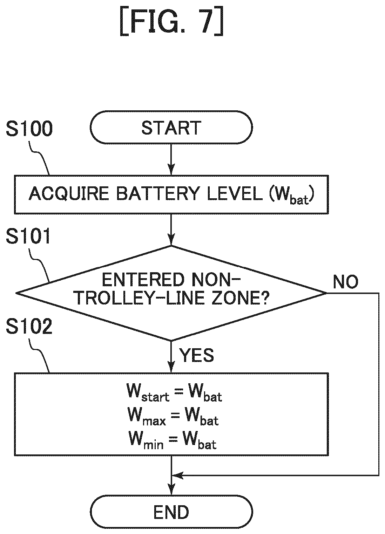

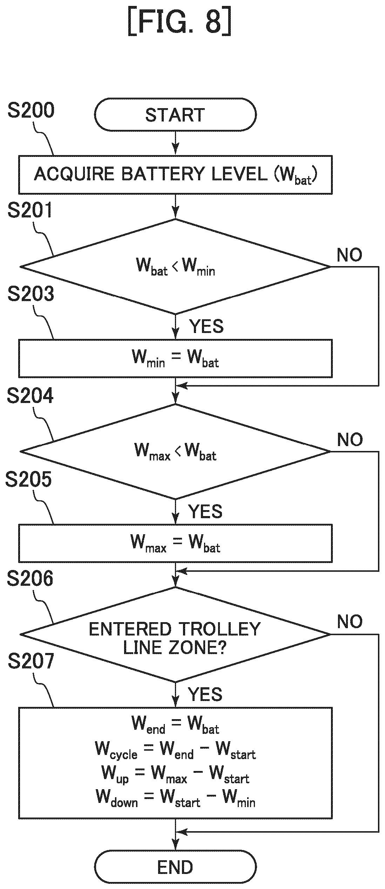

The trolley signal and the battery level (Wbat) are input to the battery level variation recording section 12a. The battery level variation recording section 12a records battery level variation in the past non-trolley-line zone 24, and computes the battery level variation amounts (Wcycle, Wup, and Wdown) on the basis of the recorded value of the past battery level variation every time the dump truck enters the trolley line zone 22. The battery level variation recording section 12a in the present embodiment configures the battery level decrease amount computation section that computes the battery level decrease amount (Wcycle). A method for computing the battery level variation amounts (Wcycle, Wup, and Wdown) in the battery level variation recording section 12a is described with use of FIGs. 7 and 8.

FIG. 7 is a flowchart of processing repeatedly executed by the battery level variation recording section 12a during travelling in the trolley line zone 22.

First, the battery level variation recording section 12a acquires the battery level (Wbat) (step S200), and determines whether or not the dump truck has entered the non-trolley-line zone 24 (step S201). When the determination result of step S201 is NO, this flow is ended.

When the determination result of step S201 is YES, the battery level (Wbat) is recorded as the starting-point battery level (Wstart), and the battery level maximum value (Wmax) and the battery level minimum value (Wmin) are each initialized by the battery level (Wbat) (step S202), and this flow is ended.

FIG. 8 is a flowchart of processing repeatedly executed by the battery level variation recording section 12a during travelling in the non-trolley-line zone 24.

First, the battery level variation recording section 12a acquires the battery level (Wbat) (step S200), and determines whether or not the battery level (Wbat) is lower than the battery level minimum value (Wmin) (step S201).

When the determination result of step S201 is YES, the battery level minimum value (Wmin) is updated by the battery level (Wbat) (step S203), and whether or not the battery level (Wbat) is higher than the battery level maximum value (Wmax) is determined (step S204).

When the determination result of step S204 is NO, a transition to step S206 is made.

When the determination result of step S204 is YES, the battery level maximum value (Wmax) is updated by the battery level (Wbat) (step S205), and whether or not the dump truck has entered the trolley line zone 22 is determined (step S206). When the determination result of step S206 is NO, this flow is ended.

When the determination result of step S206 is YES, the battery level (Wbat) is recorded as the ending-point battery level (Wend), and the battery level decrease amount (Wcycle) is computed by subtracting the starting-point battery level (Wstart) from the ending-point battery level (Wend). Further, the battery level maximum rise amount (Wup) is computed by subtracting the starting-point battery level (Wstart) from the battery level maximum value (Wmax), and the battery level maximum fall amount (Wdown) is computed by subtracting the battery level minimum value (Wmin) from the starting-point battery level (Wstart) (step S207), and this flow is ended.

By the above processing, the battery level variation amounts (Wcycle, Wup, and Wdown) are computed when the dump truck has entered the trolley line zone 22. The battery level variation amounts (Wcycle, Wup, and Wdown) may be computed from battery level variation in one travelling cycle, or be computed by executing filter processing (for example, moving average processing) for the battery level variation amounts (Wcycle, Wup, and Wdown) of a plurality of past travelling cycles. Further, in the retention of the battery level variation amounts (Wcycle, Wup, and Wdown) of a plurality of cycles and the computation by the filter processing, the retained values and the computed values may be corrected by the loading amount. The correction of the battery level variation amounts (Wcycle, Wup, and Wdown) by the loading amount is described. Change in the battery level variation amounts (Wcycle, Wup, and Wdown) depending on the loading amount is set as a loading amount correction table. When being retained, the battery level variation amounts (Wcycle, Wup, and Wdown) are retained after being converted to the battery level variation amounts (Wcycle, Wup, and Wdown) with a reference loading amount from the loading amount at the time of the retention by the loading amount correction table. In computation by filter processing, the computation is executed after conversion to the battery level variation amounts (Wcycle, Wup, and Wdown) with the loading amount at the time of the computation from the reference loading amount by the loading amount correction table. By the correction based on the loading amount, the influence of change in the loading amount on the computation result of the battery level variation amounts (Wcycle, Wup, and Wdown) can be reduced even when the loading amount differs for each travelling cycle.

The battery level decrease amount (Wcycle) among the battery level variation amounts (Wcycle, Wup, and Wdown) is input to the battery level target increase width computation section 12b. In the battery level recovery time, due to the limitation on the battery maximum charging power and the upper limit value of the trolley line supplying power, the dump truck is required to travel at a lowered speed in the trolley line zone 22 to reserve the charging time in the trolley line zone 22 in some cases. A minimum average travelling speed (Vrecover) in the trolley line zone 22 allowed in such a battery level recovery time is set. Further, an allowable average speed lowering rate (K) of the trolley line zone 22 is defined as the ratio of the minimum average travelling speed (Vrecover) to an average travelling speed (Vstable) in the trolley line zone 22 in the battery level stable time as represented by formula 1.

[Formula 1]

$$K = \frac{V_{recover}}{V_{stable}}$$

The battery level target increase width computation section 12b calculates the ratio of the longest trolley line zone travelling time that is allowed to the trolley line zone travelling time in the battery level stable time, from the allowable average speed lowering rate (K) of the trolley line zone 22, and sets the battery level addition amount (Wstep) from the battery level increase amount in a case in which the dump truck travels at the average travelling speed (Vstable) in the trolley line zone 22 (= battery decrease amount (Wcycle)). The battery level addition amount (Wstep) is computed by using, for example, formula 2.

[Formula 2]

$$W_{step} = \left(\frac{1}{K} - 1\right) W_{cycle}$$

Formula 3 is obtained when formula 2 is deformed with use of formula 1.

[Formula 3]

$$W_{step} = \frac{V_{stable} - V_{recover}}{V_{recover}} \times W_{cycle}$$

The battery level addition amount (Wstep) may be set as a constant instead of being computed by the battery level target increase width computation section 12b. In the case of employing a constant as the battery level addition amount (Wstep), the travelling time in a case in which the dump truck travels at a target average travelling speed in the trolley line zone 22 is calculated, and a value obtained by subtracting the battery level decrease amount (Wcycle) from the battery level that increases by battery charging for this travelling time is set as the battery level addition amount (Wstep).

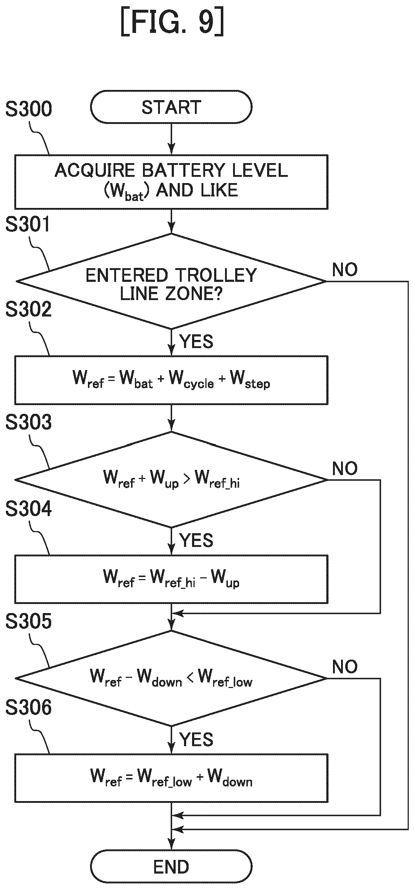

To the battery level target value computation section 12c, the trolley signal, the battery level, the battery level variation amounts, the battery level target increase width, and battery level upper and lower limit values are input. A method for computing the battery level target value in the battery level target value computation section 12c is described with use of FIG. 9.

FIG. 9 is a flowchart of processing repeatedly executed by the battery level target value computation section 12c during travelling in the non-trolley-line zone 24.

First, the battery level target value computation section 12c acquires the battery level (Wbat), the battery level variation amounts (Wcycle, Wup, and Wdown), the battery level upper limit value (Wref_hi), and the battery level lower limit value (Wref_low) (step S300), and determines whether or not the dump truck has entered the trolley line zone 22 (step S301). When the determination result of step S301 is NO, this flow is ended.

When the determination result of step S301 is YES, the battery level target value (Wref) is computed by adding the battery level decrease amount (Wcycle) and the battery level addition amount (Wstep) to the battery level (Wbat) (step S302). Then, the sum of the battery level target value (Wref) and the battery level maximum rise amount (Wup) is computed as an estimated value of the battery level maximum value (Wmax) in the non-trolley-line zone 24 of the next time in a case in which charging is executed to reach the battery level target value (Wref), and whether or not this estimated value is larger than the battery level upper limit value (Wref_hi) is determined (step S303).

When the determination result of step S303 is YES, a value obtained by subtracting the battery level maximum rise amount (Wup) from the battery level upper limit value (Wref_hi) is set as the battery level target value (Wref) (step S304). Then, a value obtained by subtracting the battery level maximum fall amount (Wdown) from the battery level target value (Wref) is computed as an estimated value of the battery level minimum value (Wmin) in the non-trolley-line zone 24 of the next time in a case in which charging is executed to reach the battery level target value (Wref), and whether or not this estimated value is smaller than the battery level lower limit value (Wref_low) is determined (step S305). When the determination result of step S305 is NO, this flow is ended.

When the determination result of step S305 is YES, a value obtained by subtracting the battery level maximum rise amount (Wup) from the battery level upper limit value (Wref_hi) is set as the battery level target value (Wref) (step S306), and this flow is ended.

By the above processing, when the dump truck enters the trolley line zone 22, the battery level target value (Wref) with which the charging amount as the sum of the battery level decrease amount (Wcycle) and the battery level addition amount (Wstep) is obtained is computed. Further, the battery level target value (Wref) is corrected such that the respective estimated values of the battery level maximum value (Wmax) and the battery level minimum value (Wmin) in the non-trolley-line zone 24 of the next time fall within the range between the battery level upper limit value (Wref_hi) and the battery level lower limit value (Wref_low).

Next, a description is given of travelling support operation for causing the battery level (Wbat) at the end of travelling in the trolley line zone 22 to correspond with the battery level target value (Wref).

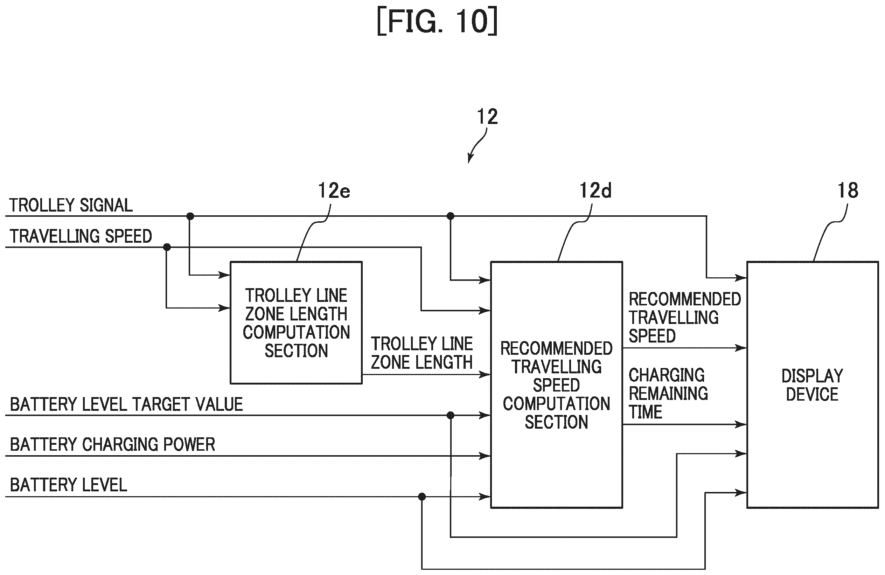

FIG. 10 is a block diagram depicting processing relating to travelling operation support by the vehicle controller 12. As the travelling support operation, the vehicle controller 12 in the present embodiment computes a travelling speed (hereinafter, the recommended travelling speed) in the trolley line zone 22 that can cause the battery level (Wbat) at the end of travelling in the trolley line zone 22 to correspond with the battery level target value (Wref), and displays the recommended travelling speed for the driver.

In FIG. 10, the vehicle controller 12 has a trolley line zone length computation section 12e that computes the trolley line zone length and the recommended travelling speed computation section 12d that computes the recommended travelling speed in the trolley line zone 22. The recommended travelling speed computation section 12d configures the travelling operation support section that supports travelling operation that causes the battery level (Wbat) at the end of travelling in the trolley line zone 22 to correspond with the battery level target value (Wref).

The trolley line zone length computation section 12e uses the trolley signal and the travelling speed as inputs, and performs an integral of the travelling speed in the trolley line zone 22 to compute the trolley line zone length. The trolley line zone length may be computed from the travelling speed in one past travelling cycle, or be computed by retaining trolley line zone lengths computed in a plurality of past travelling cycles and executing filter processing (for example, moving average processing) for them. Further, when already being known, the trolley line zone length may be set as a constant value instead of being computed by the trolley line zone length computation section 12e. Moreover, the trolley line zone length computation section 12e may use the current position of the vehicle as an input instead of using the travelling speed as an input, and compute the movement distance in the trolley line zone 22 as the trolley line zone length.

To the recommended travelling speed computation section 12d, the trolley signal, the travelling speed, the battery level target value (Wref), the battery charging power, and the battery level (Wbat) are input. During travelling in the trolley line zone 22, the recommended travelling speed computation section 12d computes the remaining charging amount by subtracting the battery level (Wbat) from the battery level target value (Wref), computes the charging remaining time by dividing the remaining charging amount by the battery charging power, and computes a travelling-completed trolley line zone length by performing an integral of the travelling speed in the trolley line zone 22. Then, the recommended travelling speed computation section 12d computes the remaining trolley line zone length by subtracting the travelling-completed trolley line zone length from the trolley line zone length, and computes the recommended travelling speed by dividing the remaining trolley line length by the charging remaining time. The recommended travelling speed computation section 12d repeatedly executes these kinds of processing during the travelling in the trolley line zone 22 to update the recommended travelling speed.

The recommended travelling speed computation section 12d may use the current position as an input instead of using the travelling speed as an input, and compute the movement distance in the trolley line zone 22 as the travelling-completed trolley line zone length. Further, the recommended travelling speed computation section 12d may execute filter processing (for example, moving average processing) for the battery charging power before computing the charging remaining time. The recommended travelling speed and the charging remaining time computed by the recommended travelling speed computation section 12d are input to the display device 18 together with the trolley signal, the battery level target value (Wref), and the battery level (Wbat).

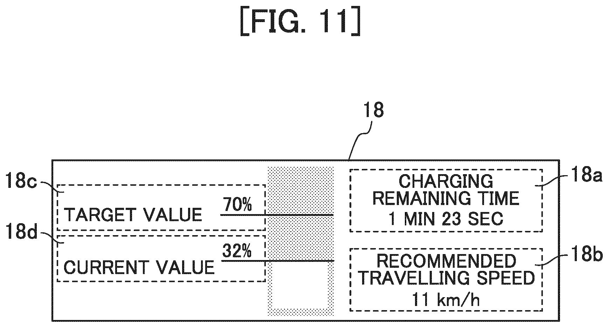

FIG. 11 is a diagram depicting one example of a display screen of the display device 18. In FIG. 11, the display screen of the display device 18 is composed of an area 18a that displays the charging remaining time, an area 18b that displays the recommended travelling speed, an area 18c that displays the battery level target value (Wref), and an area 18d that displays the battery level. Besides, areas that display the speed of the vehicle and the operation status of the electric drive system, and the like, may be added as constituent elements of the display screen. It is sufficient that at least the area 18b that displays the recommended travelling speed is reserved, for achieving the effect of causing the battery level (Wbat) at the end of travelling in the trolley line zone 22 to correspond with the battery level target value (Wref).

(Summarization)

In the present embodiment, the dump truck includes the travelling motor 2, the inverter 9 that converts DC power to AC power and supplies the AC power to the travelling motor 2, the battery 1, the battery converter 13 that controls the charging/discharging power of the battery 1, and the pantographs 6L and 6R that receive power supply from the trolley lines 7L and 7R. The dump truck includes also the vehicle controller 12 that controls the battery converter 13 and the inverter 9 such that power is supplied from the trolley lines 7L and 7R to the battery 1 and the travelling motor 2 in the trolley line zone 22 that is the travelling zone in which the trolley lines 7L and 7R are disposed and controls the battery converter 13 and the inverter 9 such that power is supplied from the battery 1 to the travelling motor 2 in the non-trolley-line zone 24 that is the travelling zone in which the trolley lines 7L and 7R are not disposed. The vehicle controller 12 has the battery level decrease amount computation section 12a that computes the battery level decrease amount (Wcycle) in the non-trolley-line zone 24, and the battery level target increase width computation section 12b that computes the battery level target increase width (Wcycle + Wstep) by adding the predetermined battery level addition amount (Wstep) to the battery level decrease amount (Wcycle). The vehicle controller 12 has also the battery level target value computation section 12c that computes the battery level target value (Wref) by adding the battery level target increase width (Wcycle + Wstep) to the battery level at the start of travelling in the trolley line zone 22, and the travelling operation support section 12d that supports travelling operation that causes the battery level (Wbat) at the end of travelling in the trolley line zone 22 to correspond with the battery level target value (Wref).

According to the present embodiment configured as above, overdischarge of the battery 1 can be prevented while the lowering of the transportation efficiency is suppressed by supporting the travelling operation that increases the battery level (Wbat) in a plurality of times of the travelling cycle gradually (by the battery level addition amount (Wstep) in every travelling cycle).

Moreover, the dump truck in the present embodiment includes the display device 18, and the travelling operation support section 12d is configured by the recommended travelling speed computation section 12d that computes the recommended travelling speed in the trolley line zone 22. The recommended travelling speed computation section 12d computes the remaining charging time in the trolley line zone 22 by dividing the difference between the battery level target value (Wref) and the battery level (Wbat) by the battery charging power, computes the recommended travelling speed by dividing the remaining travelling distance in the trolley line zone 22 by the remaining charging time, and outputs the recommended travelling speed to the display device 18. As a result, through operation by the driver according to the recommended travelling speed displayed on the display device 18, the battery level (Wbat) at the end of travelling in the trolley line zone 22 can be caused to correspond with the battery level target value (Wref).

Further, the battery level decrease amount computation section 12a in the present embodiment is configured by the battery level variation recording section 12a that records battery level variation in the non-trolley-line zone 24. The battery level variation recording section 12a computes the battery level decrease amount (Wcycle) by using a recorded value of the battery level variation. This makes it possible to compute the battery level decrease amount (Wcycle) from the battery level variation in the past non-trolley-line zone 24.

Moreover, the battery level target increase width computation section 12b in the present embodiment computes the battery level addition amount (Wstep) by multiplying, by the battery level decrease amount (Wcycle), a value obtained by dividing a difference resulting from subtracting the minimum average travelling speed (Vrecover) in the trolley line zone 22 in the battery level recovery time in which the battery level addition amount (Wstep) is larger than zero from the average travelling speed (Vstable) in the trolley line zone 22 in the battery level stable time in which the battery level addition amount (Wstep) is zero by the minimum average travelling speed (Vrecover) (formula 3). This makes it possible to suppress the lowering of the travelling speed in the trolley line zone 22 within the allowable range.

Further, the battery level target value computation section 12c in the present embodiment computes estimated values of the battery level maximum value (Wmax) and the battery level minimum value (Wmin) in a case in which the dump truck travels in the non-trolley-line zone 24 after the battery 1 is charged to the battery level target value (Wref) in the trolley line zone 22. The battery level target value computation section 12c corrects the battery level target value (Wref) toward the decrease side when the estimated value of the battery level maximum value (Wmax) is larger than the battery level upper limit value (Wref_hi) set on the basis of the battery lifetime, and corrects the battery level target value (Wref) toward the increase side when the estimated value of the battery level minimum value (Wmin) is smaller than the battery level lower limit value (Wref_low) set on the basis of the battery lifetime. This makes it possible to suppress the variation in the battery level within the range between the battery level upper limit value (Wref_hi) and the battery level lower limit value (Wref_low).

[Second Embodiment]

A second embodiment of the present invention is described with focus placed on differences from the first embodiment. The first embodiment is configured such that the battery level target value (Wref) is computed with use of the battery level variation amounts (Wcycle, Wup, and Wdown) computed on the basis of a recorded value of the battery level variation. In the present embodiment, the battery level target value (Wref) is computed with use of the battery level variation amounts (Wcycle, Wup, and Wdown) computed on the basis of an estimated value of the battery level variation.

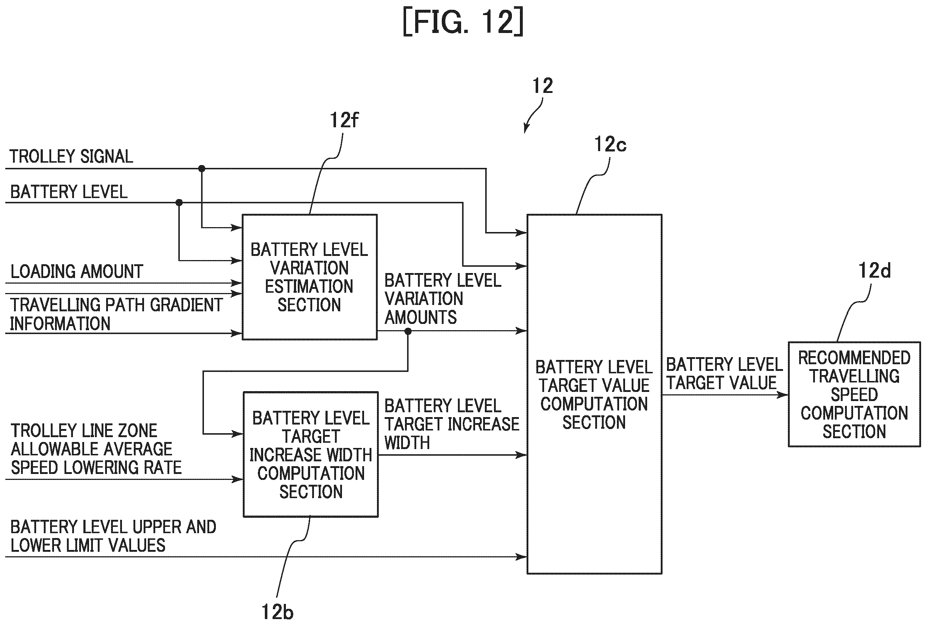

FIG. 12 is a block diagram depicting processing relating to computation of the battery level target value by the vehicle controller 12 in the present embodiment. In FIG. 12, the vehicle controller 12 in the present embodiment has a battery level variation estimation section 12f instead of the battery level variation recording section 12a (depicted in FIG. 6) in the first embodiment. The battery level variation estimation section 12f computes an estimated value of the battery level variation amounts (Wcycle, Wup, and Wdown) on the basis of the trolley signal, the battery level, the loading amount, and travelling path gradient information. The battery level variation estimation section 12f in the present embodiment configures the battery level decrease amount computation section that computes the battery level decrease amount (Wcycle).

The loading amount and the travelling path gradient information are further input to the battery level variation estimation section 12f. When the dump truck has entered the non-trolley-line zone 24, the battery level variation estimation section 12f computes an estimated value of the battery level variation amounts (Wcycle, Wup, and Wdown) in the non-trolley-line zone 24 from the loading amount and the travelling path gradient information. The travelling path gradient information may be set as a default value in advance, or be computed from variation in a gradient measurement value in a past travelling cycle.

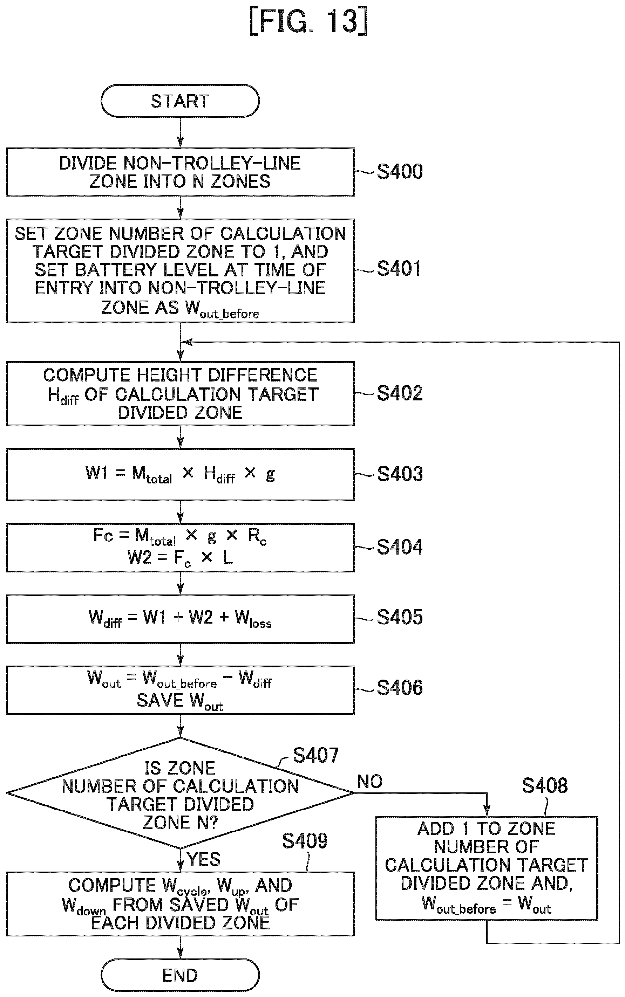

FIG. 13 is a flowchart depicting processing by the battery level variation estimation section 12f.

First, the battery level variation estimation section 12f divides the non-trolley-line zone 24 into N zones, and gives zone numbers of 1 to N to the divided zones (step S400).

In step S401, the zone number of the divided zone as the calculation target (hereinafter, the calculation target divided zone) is set to 1, and the battery level (Wbat) at the time of entry into the non-trolley-line zone 24 is set as an exit-timing battery level (Wout_before) of the divided zone (step S401).

Subsequently to step S401, a height difference (Hdiff) between the start point and the end point of the calculation target divided zone is calculated from the gradient information of the calculation target divided zone (step S402).

Subsequently to step S402, energy consumed according to the height difference (Hdiff) (hereinafter, the height difference energy consumption) (W1) is calculated by the product of a total weight (Mtotal) that is the sum of the vehicle weight and the loading amount, the height difference (Hdiff), and gravitational acceleration (g) (step S403).

Subsequently to step S403, energy consumed according to rolling resistance (Fc) (hereinafter, the resistance energy consumption) (W2) is calculated. The rolling resistance (Fc) is calculated by multiplying the normal force obtained as the product of the total weight (Mtotal) and the gravitational acceleration (g) by a rolling resistance coefficient (Rc). The rolling resistance coefficient (Rc) is the ratio of the rolling resistance (Fc) to the normal force, and a constant value is set in advance. Alternatively, change in the rolling resistance coefficient (Rc) with respect to the loading amount is saved as a table, and the rolling resistance coefficient (Rc) that changes depending on the loading amount is used through reference to the table. The resistance energy consumption (W2) is calculated by multiplying the rolling resistance (Fc) and a length (L) of the calculation target divided zone. The sum of the height difference energy consumption (W1) and the resistance energy consumption (W2) is energy consumed in travelling in the calculation target divided zone.

Subsequently to step S404, a battery level difference (Wdiff) is calculated by adding lost energy (Wloss) caused when the charging/discharging power amount of the battery 1 is converted to a tire driving force to the height difference energy consumption (W1) and the resistance energy consumption (W2) (step S405). The lost energy (Wloss) may be calculated by multiplying the height difference energy consumption (W1) and the resistance energy consumption (W2) by a certain ratio. Alternatively, change in the lost energy (Wloss) with respect to the sum of the height difference energy consumption (W1) and the resistance energy consumption (W2) may be saved as a table, and the lost energy (Wloss) may be calculated with reference to this table.

Subsequently to step S405, the battery level difference (Wdiff) is subtracted from the exit-timing battery level (Wout_before) of the previous divided zone to calculate and save the exit-timing battery level (Wout) of the calculation target divided zone (step S406).

Subsequently to step S406, it is determined whether or not the calculation target zone number is N (calculation of the exit-timing battery level (Wout) of all divided zones has been completed) (step S407). When the determination result of step S407 is NO, 1 is added to the zone number of the calculation target divided zone, and the exit-timing battery level (Wout_before) of the previous divided zone is set to the exit-timing battery level (Wout) of the calculation target divided zone (step S408), followed by a return to step S402.

When the determination result of step S407 is YES, the maximum value of the exit-timing battery level (Wout) of the respective divided zones is regarded as the battery level maximum rise amount (Wup), and the minimum value is regarded as the battery level maximum fall amount (Wdown). In addition, the battery level decrease amount (Wcycle) is calculated by subtracting the exit-timing battery level (Wout) of the N-th divided zone from the battery level (Wbat) at the time of the entry into the non-trolley-line zone 24 (step S409), and this flow is ended.

The method for estimating the battery level variation in the non-trolley-line zone 24 is not particularly limited to any specific kind as long as the method can compute an estimated value of the battery level variation amounts (Wcycle, Wup, and Wdown). For example, the loading amount and the travelling path gradient information may be input to a vehicle body dynamical model and an electric drive system model, and an estimated value of the battery level variation amounts (Wcycle, Wup, and Wdown) may be computed by numerical analysis.

(Summarization)

The battery level decrease amount computation section 12f in the present embodiment is configured by the battery level variation estimation section 12f that estimates battery level variation in the non-trolley-line zone 24. The battery level variation estimation section 12f computes an estimated value (exit-timing battery level (Wout) of each divided zone) of the battery level variation in the non-trolley-line zone 24 by using the loading amount of the dump truck and the gradient information of the non-trolley-line zone 24, and computes the battery level decrease amount (Wcycle) of the non-trolley-line zone 24 by using the estimated value of the battery level variation.

Also in the present embodiment configured as above, effects similar to those of the first embodiment can be achieved. Further, the battery level target value (Wref) can be set to a more proper value by computing the battery level decrease amount (Wcycle) of the non-trolley-line zone 24 with use of the loading amount of the dump truck and the gradient information of the non-trolley-line zone 24.

[Third Embodiment]

A third embodiment of the present invention is described with focus placed on differences from the first embodiment. In the present embodiment, the battery level (Wbat) at the end of travelling in the trolley line zone 22 is caused to correspond with the battery level target value (Wref) by controlling the battery charging power during travelling in the trolley line zone 22.

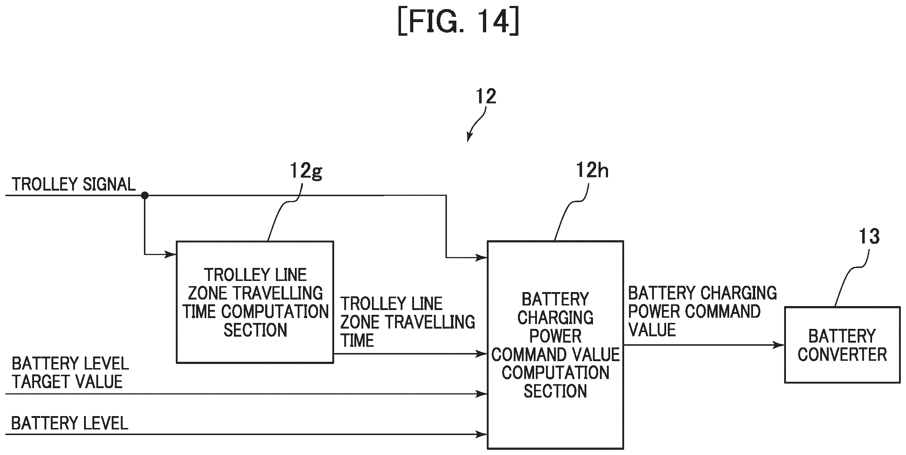

FIG. 14 is a block diagram depicting processing relating to control of the battery charging power by the vehicle controller 12 in the present embodiment. In FIG. 14, the vehicle controller 12 has a trolley line zone travelling time computation section 12g that computes the travelling time in the trolley line zone 22 and a battery charging power command value computation section 12h that computes a battery charging power command value.

The trolley line zone travelling time computation section 12g computes the length of time for which the state in which the trolley signal is ON has continued as a trolley line zone travelling time. The trolley line zone travelling time may be computed from the trolley line zone travelling time in one travelling cycle, or be computed by retaining trolley line zone travelling times computed in a plurality of past travelling cycles and executing filter processing (for example, moving average processing) for them. Further, when already being known, the trolley line zone travelling time may be set to a constant value without the trolley line zone travelling time computation section 12g being provided.

During travelling in the trolley line zone 22, the battery charging power command value computation section 12h computes the remaining trolley line zone travelling time by subtracting the elapsed time from the entry into the trolley line zone 22 from the trolley line zone travelling time. In addition, the battery charging power command value computation section 12h computes the remaining charging amount by subtracting the battery level from the battery level target value, computes the battery charging power command value by dividing the remaining charging amount by the remaining trolley line zone travelling time, and outputs the battery charging power command value to the battery converter 13. The battery converter 13 controls the battery charging power such that the battery charging power corresponds with the battery charging power command value.

(Summarization)

The vehicle controller 12 in the present embodiment has the trolley line zone travelling time computation section 12g that computes the travelling time of the trolley line zone 22, and the battery charging power command value computation section 12h that computes the remaining travelling time in the trolley line zone 22 by subtracting the elapsed time from the entry into the trolley line zone 22 from the travelling time, computes the remaining charging amount by subtracting the battery level (Wbat) from the battery level target value (Wref), computes the battery charging power command value by dividing the remaining charging amount by the remaining travelling time, and outputs the battery charging power command value to the battery converter 13.

Also in the present embodiment configured as above, effects similar to those of the first embodiment can be achieved. Further, charging to the battery level target value (Wref) can be executed while the battery charging power is suppressed to the minimum. Thus, the deterioration of the battery 1 can be suppressed.

[Fourth Embodiment]

A fourth embodiment of the present invention is described with focus placed on differences from the first embodiment. The first embodiment is configured such that the recommended travelling speed in the trolley line zone 22 is computed and displayed for the driver. In the present embodiment, the travelling motor 2 is driven such that the travelling speed in the trolley line zone 22 corresponds with the recommended travelling speed.

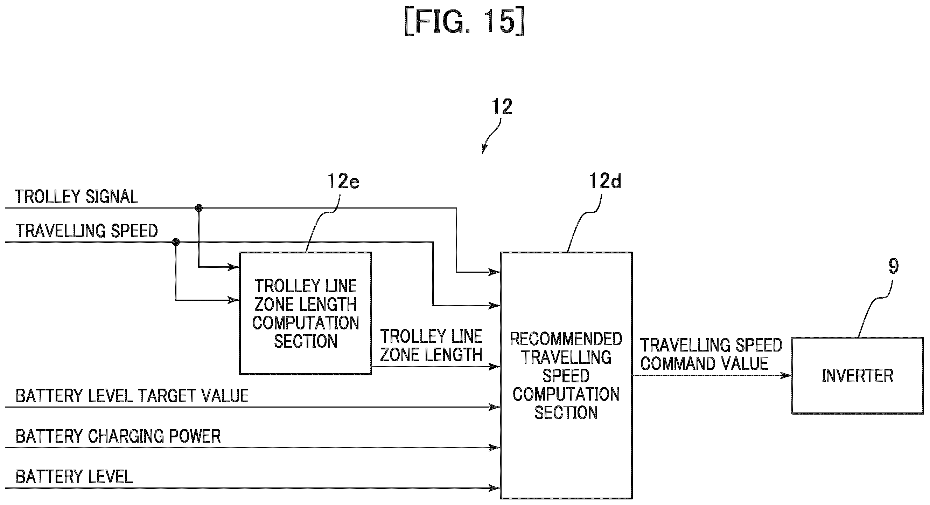

FIG. 15 is a block diagram depicting processing relating to travelling operation support by the vehicle controller 12. In FIG. 15, the recommended travelling speed computation section 12d outputs a travelling speed command value corresponding to the recommended travelling speed to the inverter 9. As a result, the inverter 9 drives the travelling motor 2 such that the travelling speed corresponds with the recommended travelling speed, and the dump truck travels at the recommended travelling speed. As in the first embodiment, the recommended travelling speed computation section 12d in the present embodiment configures the travelling operation support section that supports travelling operation that causes the battery level (Wbat) at the end of travelling in the trolley line zone 22 to correspond with the battery level target value (Wref).

(Summarization)

The travelling operation support section 12d in the present embodiment is configured by the recommended travelling speed computation section 12d that computes the recommended travelling speed in the trolley line zone 22. The recommended travelling speed computation section 12d computes the remaining charging time in the trolley line zone 22 by dividing the difference between the battery level target value (Wref) and the battery level (Wbat) by the battery charging power, computes the recommended travelling speed by dividing the remaining travelling distance in the trolley line zone 22 by the remaining charging time, and outputs the travelling speed command value corresponding to the recommended travelling speed to the inverter 9.

Also in the present embodiment configured as above, effects similar to those of the first embodiment are achieved. Moreover, the travelling speed in the trolley line zone 22 can be caused to correspond with the recommended travelling speed without depending on operation by the driver. This makes it possible to cause the battery level (Wbat) at the end of travelling in the trolley line zone 22 to accurately correspond with the battery level target value (Wref).

Description of Reference Characters

1: Battery
2: Travelling motor
3L, 3R: Driven wheel
4L, 4R: Drive wheel
5: Driving seat
6L, 6R: Pantograph
7L, 7R: Trolley line
8: Vessel
9: Inverter
10: Trolley box
11: External resistor
12: Vehicle controller
12a: Battery level variation recording section (battery level decrease amount computation section)
12b: Battery level target increase width computation section
12c: Battery level target value computation section
12d: Recommended travelling speed computation section (travelling operation support section)
12e: Trolley line zone length computation section
12f: Battery level variation estimation section (battery level decrease amount computation section)
12g: Trolley line zone travelling time computation section
12h: Battery charging power command value computation section
13: Battery converter
14: Accelerator pedal
15: Brake pedal
16: Vehicle speed sensor
17: Loading amount sensor
18: Display device
18a to 18d: Area
20: Loading site
21: Dumping site
22: Trolley line zone

23: Power supply facility on the ground
24: Non-trolley-line zone

**Claims**

1.  A dump truck comprising:

    a travelling motor;
    an inverter that converts direct-current power to alternating-current power and supplies the alternating-current power to the travelling motor;
    a battery;
    a battery converter that controls charging/discharging power of the battery;
    a pantograph that receives power supply from a trolley line; and
    a vehicle controller that controls the battery converter and the inverter such that power is supplied from the trolley line to the battery and the travelling motor in a trolley line zone that is a travelling zone in which the trolley line is disposed and controls the battery converter and the inverter such that power is supplied from the battery to the travelling motor in a non-trolley-line zone that is a travelling zone in which the trolley line is not disposed, wherein the vehicle controller has

    a battery level decrease amount computation section configured to compute a battery level decrease amount in the non-trolley-line zone,
    a battery level target increase width computation section configured to compute a battery level target increase width by adding a predetermined battery level addition amount to the battery level decrease amount,
    a battery level target value computation section configured to compute a battery level target value by adding the battery level target increase width to a battery level at start of travelling in the trolley line zone, and
    a travelling operation support section that supports travelling operation that causes the battery level at end of travelling in the trolley line zone to correspond with the battery level target value.

2.  The dump truck according to claim 1, comprising:

    a display device, wherein
    the travelling operation support section is configured by a recommended travelling speed computation section configured to compute a recommended travelling speed in the trolley line zone, and
    the recommended travelling speed computation section is configured to

    compute a remaining charging time in the trolley line zone by dividing a difference between the battery level target value and the battery level by battery charging power,
    compute the recommended travelling speed by dividing a remaining travelling distance in the trolley line zone by the remaining charging time, and
    output the recommended travelling speed to the display device.

3.  The dump truck according to claim 1, wherein

    the travelling operation support section is configured by a recommended travelling speed computation section configured to compute a recommended travelling speed in the trolley line zone, and
    the recommended travelling speed computation section is configured to

    compute a remaining charging time in the trolley line zone by dividing a difference between the battery level target value and the battery level by battery charging power,
    compute the recommended travelling speed by dividing a remaining travelling distance in the trolley line zone by the remaining charging time, and
    output a travelling speed command value corresponding to the recommended travelling speed to the inverter.

4.  The dump truck according to claim 1, wherein

    the battery level decrease amount computation section is configured by a battery level variation recording section configured to record battery level variation in the non-trolley-line zone, and

the battery level variation recording section is configured to compute the battery level decrease amount by using a recorded value of the battery level variation.

5. The dump truck according to claim 1, wherein

the battery level decrease amount computation section is configured by a battery level variation estimation section configured to estimate battery level variation in the non-trolley-line zone, and
the battery level variation estimation section is configured to

compute an estimated value of the battery level variation in the non-trolley-line zone by using a loading amount of the dump truck and gradient information of the non-trolley-line zone, and
compute the battery level decrease amount in the non-trolley-line zone by using the estimated value of the battery level variation.

6. The dump truck according to claim 1, wherein
the battery level target increase width computation section is configured to
compute the battery level addition amount by multiplying, by the battery level decrease amount, a value obtained by dividing a difference resulting from subtracting a minimum average travelling speed in the trolley line zone allowed in a battery level recovery time in which the battery level addition amount is larger than zero from an average travelling speed in the trolley line zone in a battery level stable time in which the battery level addition amount is zero by the minimum average travelling speed.

7. The dump truck according to claim 1, wherein
the battery level target value computation section is configured to

compute estimated values of a battery level maximum value and a battery level minimum value in a case in which the dump truck travels in the non-trolley-line zone after the battery is charged to the battery level target value in the trolley line zone,
correct the battery level target value toward a decrease side when the estimated value of the battery level maximum value is larger than a battery level upper limit value set on a basis of a battery lifetime, and
correct the battery level target value toward an increase side when the estimated value of the battery level minimum value is smaller than a battery level lower limit value set on a basis of the battery lifetime.

8. The dump truck according to claim 1, wherein
the vehicle controller has

a trolley line zone travelling time computation section configured to compute a travelling time in the trolley line zone, and
a battery charging power command value computation section configured to compute a remaining travelling time in the trolley line zone by subtracting an elapsed time from entry into the trolley line zone from the travelling time, compute a remaining charging amount by subtracting the battery level from the battery level target value, compute a battery charging power command value by dividing the remaining charging amount by the remaining travelling time, and output the battery charging power command value to the battery converter.

[FIG. 1]

[FIG. 2]

[FIG. 3]

## [FIG. 4]

[FIG. 5]

EP 4 566 872 A1

[FIG. 6]

TROLLEY SIGNAL

BATTERY LEVEL

12a

BATTERY LEVEL VARIATION RECORDING SECTION

BATTERY LEVEL VARIATION AMOUNTS

12

12c

BATTERY LEVEL TARGET VALUE COMPUTATION SECTION

BATTERY LEVEL TARGET VALUE

12d

RECOMMENDED TRAVELLING SPEED COMPUTATION SECTION

TROLLEY LINE ZONE ALLOWABLE AVERAGE SPEED LOWERING RATE

BATTERY LEVEL TARGET INCREASE WIDTH COMPUTATION SECTION

BATTERY LEVEL TARGET INCREASE WIDTH

BATTERY LEVEL UPPER AND LOWER LIMIT VALUES

12b

EP 4 566 872 A1

[FIG. 7]

S100

START

ACQUIRE BATTERY LEVEL ($W_{bat}$)

S101

ENTERED NON-
TROLLEY-LINE ZONE?　　　NO

S102

YES

$W_{start} = W_{bat}$
$W_{max} = W_{bat}$
$W_{min} = W_{bat}$

END

21

## [FIG. 8]

S200 START

ACQUIRE BATTERY LEVEL ($W_{bat}$)

S201

$W_{bat} < W_{min}$ — NO

S203 YES

$W_{min} = W_{bat}$

S204

$W_{max} < W_{bat}$ — NO

S205 YES

$W_{max} = W_{bat}$

S206

ENTERED TROLLEY LINE ZONE? — NO

S207 YES

$W_{end} = W_{bat}$
$W_{cycle} = W_{end} - W_{start}$
$W_{up} = W_{max} - W_{start}$
$W_{down} = W_{start} - W_{min}$

END

# [FIG. 9]

S300

START

ACQUIRE BATTERY LEVEL $(W_{bat})$ AND LIKE

S301

ENTERED TROLLEY LINE ZONE? —— NO

S302 ↓ YES

$W_{ref} = W_{bat} + W_{cycle} + W_{step}$

S303

$W_{ref} + W_{up} > W_{ref\_hi}$ —— NO

S304 ↓ YES

$W_{ref} = W_{ref\_hi} - W_{up}$

S305

$W_{ref} - W_{down} < W_{ref\_low}$ —— NO

S306 ↓ YES

$W_{ref} = W_{ref\_low} + W_{down}$

END

[FIG. 10]

[FIG. 11]

18

18c — TARGET VALUE 70%

18d — CURRENT VALUE 32%

18a — CHARGING REMAINING TIME 1 MIN 23 SEC

18b — RECOMMENDED TRAVELLING SPEED 11 km/h

[FIG. 12]

EP 4 566 872 A1

# [FIG. 13]

```
                    ( START )
                       │
                       ▼
        ┌──────────────────────────────┐
        │ DIVIDE NON-TROLLEY-LINE       │──S400
        │ ZONE INTO N ZONES             │
        └──────────────────────────────┘
                       │
                       ▼
        ┌──────────────────────────────┐
        │ SET ZONE NUMBER OF CALCULATION│
        │ TARGET DIVIDED ZONE TO 1, AND │
        │ SET BATTERY LEVEL AT TIME OF  │──S401
        │ ENTRY INTO NON-TROLLEY-LINE   │
        │ ZONE AS W_out_before          │
        └──────────────────────────────┘
                       │
                       ▼ ◄─────────────────────────────────┐
        ┌──────────────────────────────┐                   │
        │ COMPUTE HEIGHT DIFFERENCE     │                   │
        │ H_diff OF CALCULATION TARGET  │──S402             │
        │ DIVIDED ZONE                  │                   │
        └──────────────────────────────┘                   │
                       │                                    │
                       ▼                                    │
        ┌──────────────────────────────┐                   │
        │ W1 = M_total × H_diff × g     │──S403             │
        └──────────────────────────────┘                   │
                       │                                    │
                       ▼                                    │
        ┌──────────────────────────────┐                   │
        │ Fc = M_total × g × R_c        │──S404             │
        │ W2 = F_c × L                  │                   │
        └──────────────────────────────┘                   │
                       │                                    │
                       ▼                                    │
        ┌──────────────────────────────┐                   │
        │ W_diff = W1 + W2 + W_loss     │──S405             │
        └──────────────────────────────┘                   │
                       │                                    │
                       ▼                                    │
        ┌──────────────────────────────┐                   │
        │ W_out = W_out_before − W_diff │──S406             │
        │ SAVE W_out                    │                   │
        └──────────────────────────────┘                   │
                       │                                    │
                       ▼         S407                       │
                  ╱─────────────╲                           │
                 ╱  IS ZONE      ╲        ┌───────────────┐ │
                ╱ NUMBER OF       ╲  NO   │ ADD 1 TO ZONE │ │
               ⟨  CALCULATION      ⟩─────▶│ NUMBER OF     │ │
                ╲ TARGET DIVIDED  ╱  S408 │ CALCULATION   │ │
                 ╲ ZONE N?       ╱        │ TARGET DIVIDED│ │
                  ╲─────────────╱         │ ZONE AND,     │─┘
                       │ YES   S409       │ W_out_before  │
                       ▼                  │ = W_out       │
        ┌──────────────────────────────┐ └───────────────┘
        │ COMPUTE W_cycle, W_up, AND    │
        │ W_down FROM SAVED W_out OF    │
        │ EACH DIVIDED ZONE             │
        └──────────────────────────────┘
                       │
                       ▼
                   ( END )
```

$$W1 = M_{total} \times H_{diff} \times g \quad \text{—S403}$$

$$Fc = M_{total} \times g \times R_c$$
$$W2 = F_c \times L \quad \text{—S404}$$

$$W_{diff} = W1 + W2 + W_{loss} \quad \text{—S405}$$

$$W_{out} = W_{out\_before} - W_{diff}$$

[FIG. 14]

[FIG. 14]

12

TROLLEY SIGNAL

12g

TROLLEY LINE
ZONE TRAVELLING
TIME COMPUTATION
SECTION

TROLLEY LINE
ZONE TRAVELLING
TIME

12h

BATTERY
CHARGING
POWER
COMMAND VALUE
COMPUTATION
SECTION

BATTERY CHARGING
POWER COMMAND
VALUE

13

BATTERY
CONVERTER

BATTERY LEVEL
TARGET VALUE

BATTERY LEVEL

EP 4 566 872 A1

[FIG. 15]

# INTERNATIONAL SEARCH REPORT

| International application No. |
|---|
| **PCT/JP2023/027855** |

## A. CLASSIFICATION OF SUBJECT MATTER

***B60L 58/13***(2019.01)i; ***B60L 9/18***(2006.01)i; ***B60L 15/20***(2006.01)i; ***B60L 50/60***(2019.01)i; ***B60L 58/16***(2019.01)i; ***H02J 7/00***(2006.01)i

FI: B60L58/13; B60L50/60; B60L58/16; B60L9/18 J; B60L15/20 J; H02J7/00 P; H02J7/00 B; H02J7/00 L

According to International Patent Classification (IPC) or to both national classification and IPC

## B. FIELDS SEARCHED

Minimum documentation searched (classification system followed by classification symbols)

B60L58/13; B60L9/18; B60L15/20; B60L50/60; B60L58/16; H02J7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2022-100690 A (HITACHI, LTD.) 06 July 2022 (2022-07-06) paragraphs [0015]-[0067], fig. 1-8 | 1-5, 8 |
| A | | 6-7 |
| Y | US 2015/0090554 A1 (SIEMENS INDUSTRY, INC.) 02 April 2015 (2015-04-02) paragraphs [0031]-[0033], [0039], fig. 3-6 | 1-5, 8 |
| A | | 6-7 |
| Y | JP 2020-115701 A (TOYOTA INDUSTRIES CORP.) 30 July 2020 (2020-07-30) paragraphs [0022]-[0024], [0036], fig. 1, 2 | 1-5, 8 |
| A | | 6-7 |
| Y | WO 2013/153659 A1 (HITACHI, LTD.) 17 October 2013 (2013-10-17) paragraphs [0015], [0028], [0052], [0059], fig. 10-12 | 2-3, 5 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 October 2023** | **17 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/027855**

| Patent document cited in search report | | | Publication date (day/month/year) | Patent family member(s) | | | Publication date (day/month/year) |
|---|---|---|---|---|---|---|---|
| JP | 2022-100690 | A | 06 July 2022 | WO | 2022/138311 | A1 | |
| US | 2015/0090554 | A1 | 02 April 2015 | WO | 2015/048422 | A1 | |
| | | | | CA | 2925605 | A | |
| | | | | CN | 105579277 | A | |
| JP | 2020-115701 | A | 30 July 2020 | WO | 2020/149102 | A1 | |
| WO | 2013/153659 | A1 | 17 October 2013 | EP | 2849312 | A1 | |
| | | | | paragraphs [0008], [0031], [0091], [0111], fig. 10-12 | | | |
| | | | | CN | 104247199 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013153659 A